# EUROPEAN PATENT SPECIFICATION

(11) **EP 4 013 279 B1**
(45) Date of publication and mention of the grant of the patent: **07.01.2026**
(21) Application number: 20851459.6
(22) Date of filing: 12.08.2020
(51) Int. Cl.: A47L 11/40, A47L 11/29, B08B 13/00, B25J 19/02, B25J 19/04, B25J 9/18, G01M 13/00, H04W 4/38, G01B 11/14

(54) **SYSTEM AND METHOD OF SEMI-AUTONOMOUS CLEANING OF SURFACES**
SYSTEM UND VERFAHREN ZUR HALBAUTONOMEN REINIGUNG VON OBERFLÄCHEN
SYSTÈME ET PROCÉDÉ DE NETTOYAGE SEMI-AUTONOME DE SURFACES

(30) Priority: 12.08.2019 US 201962885375 P; 26.05.2020 US 202063030053 P; 24.07.2020 US 202063055919 P
(43) Date of publication of application: 22.06.2022
(73) Proprietor: Avidbots Corp., Kitchener, Ontario N2E 3Z5 (CA); Molina Cabrera, Pablo Roberto, Kitchener, Ontario N2E 3Z5 (CA)
(72) Inventor: CHOI, Yoohee, Kitchener, Ontario N2E 3Z5 (CA); COCA, Florin, Kitchener, Ontario N2E 3Z5 (CA); FAKIH, Adel, Kitchener, Ontario N2E 3Z5 (CA); PARK, Bongkyun, Kitchener, Ontario N2E 3Z5 (CA); YE, Weilong, Kitchener, Ontario N2E 3Z5 (CA); RASHEED, Umer, Kitchener, Ontario N2E 3Z5 (CA); BAJWA, Bhavnit Singh, Kitchener, Ontario N2E 3Z5 (CA); FRASER, Cameron Scott Reidlinger, Kitchener, Ontario N2E 3Z5 (CA); LEE, Kenneth King Ho, Kitchener, Ontario N2E 3Z5 (CA); MCLENNAN, Duncan Chapman, Kitchener, Ontario N2E 3Z5 (CA); DUCHESNE, Thomas Joseph, Kitchener, Ontario N2E 3Z5 (CA); HAYTON, Breanna May, Kitchener, Ontario N2E 3Z5 (CA); GORZKOWSKI, Igor, Kitchener, Ontario N2E 3Z5 (CA); HYDE, John James Samuel, Kitchener, Ontario N2E 3Z5 (CA); BERSENEV, Alexander, Kitchener, Ontario N2E 3Z5 (CA); BABOOLAL, Ravi, Kitchener, Ontario N2E 3Z5 (CA); GUPTA, Dhrov, Kitchener, Ontario N2E 3Z5 (CA); GRANDIN, Thomas, Kitchener, Ontario N2E 3Z5 (CA); MOLINA CABRERA, Pablo Roberto, Kitchener, ON Kitchener, Ontario N2E 3Z5 (CA)
(74) Representative: Dennemeyer & Associates S.A.
(86) International application number: PCT/CA2020/051100
(87) International publication number: WO 2021/026649

(56) References cited:
- WO-A2-2018/124682
- CN-A- 109 997 089
- DE-A1- 102011 000 816
- DE-A1- 102017 104 690
- US-A1- 2014 352 103
- US-A1- 2017 049 288
- US-A1- 2018 279 847
- US-A1- 2018 281 191
- US-A1- 2018 361 585
- US-A1- 2019 121 361
- US-A1- 2019 167 060

## Description

### Cross Reference to Related Applications

The application claims priority to and the benefit of US Provisional Patent Application Serial No. 62/885,375, entitled "SYSTEM AND METHOD OF SEMI-AUTONOMOUS CLEANING OF SURFACES", filed on August 12, 2019, and No. 63/030,053, entitled "SYSTEM AND METHOD OF SEMI-AUTONOMOUS CLEANING OF SURFACES", filed on May 26, 2020, and No. 63/055,919, entitled "DISINFECTION MODULE FOR A SEMI-AUTONOMOUS CLEANING AND DISINFECTION DEVICE", filed on July 24, 2020, these disclosures of which is incorporated herein by reference in its entirety.

### Background

The embodiments described herein relate to semi-autonomous cleaning devices and more particularly, to a system and method for detecting the status of one or more components and/or systems in a semi-autonomous cleaning device to for improved cleaning of surfaces.

The use of semi-autonomous devices configured to perform a set of tasks is known. For example, robots can be used to clean a surface, mow a lawn, collect items from a stocked inventory, etc. In some instances, however, some known robots fail to provide a user with an indication of the robot's position, progress, and/or status of one or more components of the system. For example, the problem of debris accumulation in back squeegee of a cleaning robot or floor scrubber is a common problem. In manual floor scrubbers, the operator can prevent the problem from happening by observing debris in the floor and avoiding driving the floor scrubber over the debris. The operator can also detect if the squeegee has blocking debris by visually inspecting the operation of one or more functions of the floor scrubber such as, for example, the quality of water pick-up provided by the back squeegee. In self-driving or semiautomatic floor scrubbers, the prevention and detection of debris in the back squeegee currently presents challenges that can reduce the efficacy and/or efficiency of these devices.

In order to perform autonomous cleaning, semi-autonomous cleaning devices such as floor scrubber and sweepers need to be equipped with reliable obstacle detection and avoidance. Such technologies such as 3 dimensions (3D) Light Detection and Ranging (LIDAR) technologies are expensive; Achieving 270 degrees protection with 3D LIDAR technologies is uneconomical.

There are cheaper vision-based technology alternatives available such as active stereo and structured infrared lighting (IR), but these technologies pose their own challenges (i.e., not commercial grade, reliability, etc.).

Active stereo technologies may be sensitive to environmental aspects such as scene texture and illuminations. Further, matching artifacts makes it challenging to separate small objects from noise. Further, structured infrared (IR) lighting is practically unusable under direct sunlight and cannot detect IR absorbing or reflective materials.

Semi-autonomous cleaning devices contain motors and actuators. In instances where the motor or actuator fail, it is difficult to determine the failure.

In an autonomous or semi-autonomous devices, used for cleaning or similar applications. The ability to robustly detect obstacles to avoid collisions, and sense cliffs to avoid falls, is an essential feature to allow the machine to successfully operate in a wide range of commercial, industrial, institutional, and other locations with a variety of lighting and obstruction characteristics. To achieve such ability, the robot must be equipped with a robust sensing system that observes the world along all possible motion directions of the robots. The system must also be affordable so as to allow customers to purchase the machine.

The active behavior and intent of various machinery are often communicated via contextual graphical user interfaces (GUIs), beeps, lights, and the like. On a self-driving device (i.e., self-driving robot), the autonomous operation of a large machine requires an intuitive, novel arrangement of communication such that the device can be seen and heard from a multitude of distances at times with occlusions, so that nearby operators can be informed of the device's presence and future actions in order for human-device teams to work together effectively and safely in the shared workspace. US 2018/361585 A1 discloses a method and system for a robotic device comprising a propulsion mechanism, a localization and navigation system and a removable service module. US 2017/049288 A1 discloses a control system for a robotic floor cleaning machine comprising a controller and a plurality of sensors. CN 109997089 A discloses a floor treatment machine or a method for treating floor surfaces, comprising a planning mode, which allows at least two zones to be defined on a floor surface to be treated and allows a first node to be defined in each zone and allows a connection path from at least one zone to a first node of another zone to be defined.

There is a desire to provide improved reliable obstacle detection and avoidance, improved sensing, improved design, improved failure detection, advanced diagnostics and expandability capabilities on semi-autonomous cleaning devices.

### Summary

Embodiments described herein relate to a system that provides semi-autonomous cleaning of surfaces by a semi-autonomous cleaning device. The system provides for improved reliable obstacle detection and avoidance, improved sensing, improved design, improved failure detection, advanced diagnostics and expandability capabilities.

A system and/or method can be provided for detecting the status of one or more components and/or systems of, for example, a manual, semi-autonomous, or fully autonomous cleaning device or the like. Embodiments described herein relate to a system that provides semi-autonomous cleaning of surfaces by a semi-autonomous cleaning device. The system provides for improved reliable obstacle detection and avoidance, improved sensing, improved design, improved failure detection, advanced diagnostics and expandability capabilities.

### Brief Description of the Drawings

**FIG.** 1 is a perspective view of a semi-autonomous cleaning device.
**FIG. 2** is a front view of a semi-autonomous cleaning device.
**FIG. 3** is a back view of a semi-autonomous cleaning device.
**FIG. 4** is a left side view of a semi-autonomous cleaning device.
**FIG. 5** is a right side view of a semi-autonomous cleaning device.
**FIG. 6** is a top planar view of a semi-autonomous cleaning device with improved sensing.
**FIG. 7** is a block diagram illustrating a hybrid sensing solution.
**FIG. 8** is a block diagram illustrating an exemplary software architecture.
**FIG.** 9 is a block diagram illustrating an individual processing module.
**FIG. 10** is a block diagram illustrating a Voxel Grid Mapper module.
**FIG. 11** is a block diagram illustrating a Floor Mapper module.
**FIG. 12** is a block diagram illustrating a Decision Maker module.
**FIG. 13A** is a perspective view of a side sweeper.
**FIG. 13B** **is** a top plan view of a semi-autonomous cleaning device with a side sweeper module.
**FIG. 13C** is a perspective view of a semi-autonomous cleaning device with a side sweeper module.
**FIG. 14** is a flow chart illustrating a cleaning fault detection system
**FIG. 15** is a flow chart illustrating a detection of a squeegee fault.
**FIG. 16** is a block diagram illustrating an exemplary electrical system for a semi-autonomous cleaning device.
**FIG. 17** is a perspective view of a semi-autonomous cleaning device with a disinfection module.

### Detailed Description

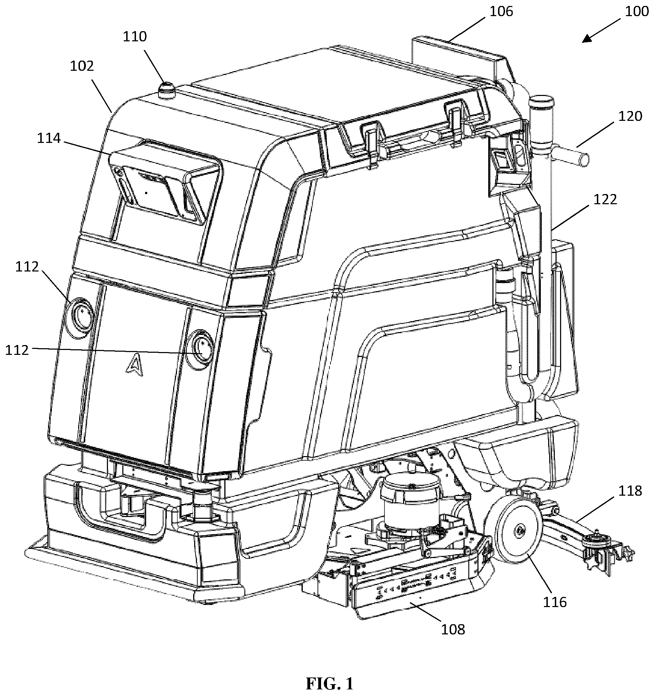

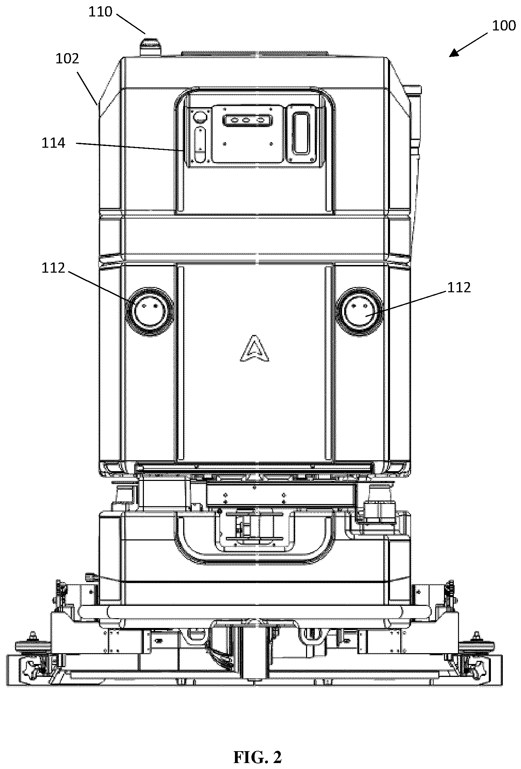

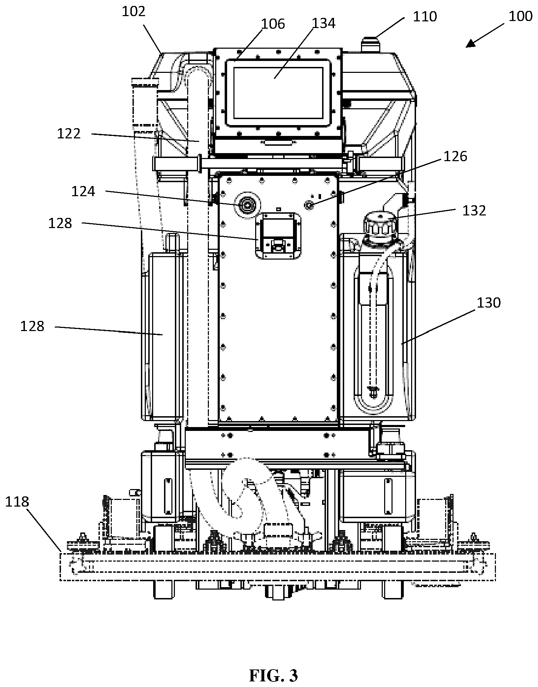

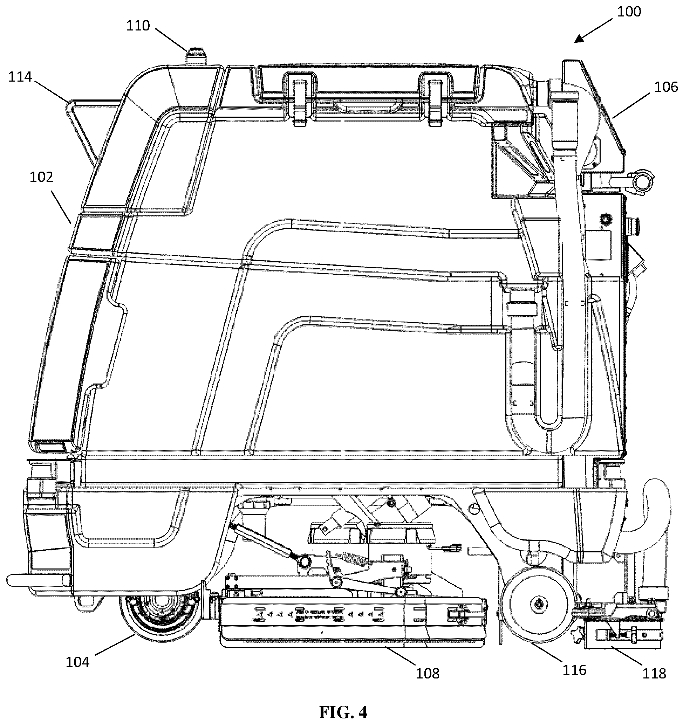

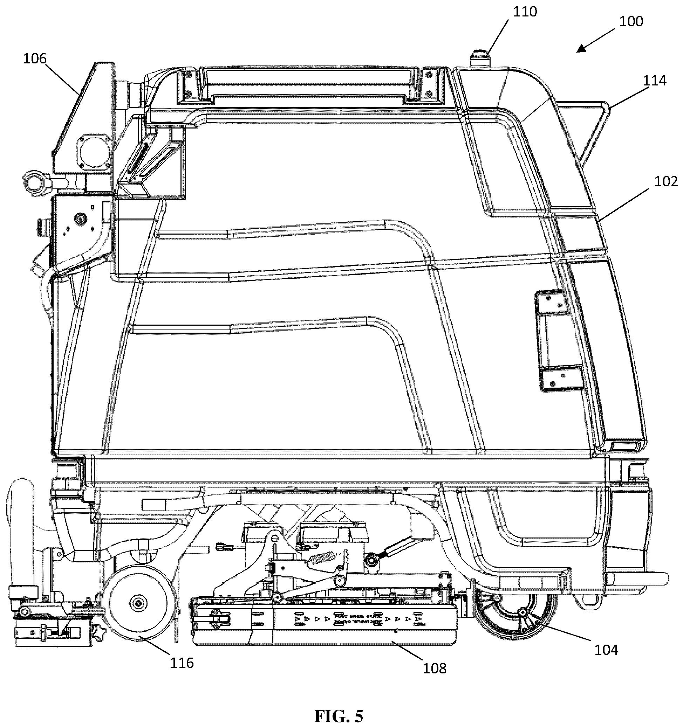

An exemplary embodiment of a semi-autonomous cleaning device is shown in **Figures 1 - 4****.** **FIG. 1** is a perspective view of a semi-autonomous cleaning device. **FIG. 2** is a front view of a semi-autonomous cleaning device. **FIG. 3** is a back view of a semi-autonomous cleaning device. **FIG. 4** is a left side view of a semi-autonomous cleaning device, and **FIG. 5** is a right side view of a semi-autonomous cleaning device.

**Figures 1** to **5** illustrate a semi-autonomous cleaning device **100.** The device **100** (also referred to herein as "cleaning robot" or "robot") includes at least a frame **102,** a drive system **104,** an electronics system **106,** and a cleaning assembly **108.** The cleaning robot **100** can be used to clean (e.g., vacuum, scrub, disinfect, etc.) any suitable surface area such as, for example, a floor of a home, commercial building, warehouse, etc. The robot **100** can be any suitable shape, size, or configuration and can include one or more systems, mechanisms, assemblies, or subassemblies that can perform any suitable function associated with, for example, traveling along a surface, mapping a surface, cleaning a surface, and/or the like.

The frame **102** of cleaning device **100** can be any suitable shape, size, and/or configuration. For example, in some embodiments, the frame **102** can include a set of components or the like, which are coupled to form a support structure configured to support the drive system **104,** the cleaning assembly **108,** and the electronic system **106.** Cleaning assembly **108** may be connected directly to **frame 102** or an alternate suitable support structure or sub-frame (not shown). The frame **102** of cleaning device **100** further comprises strobe light **110,** front lights **112,** a front sensing module **114** and a rear sensing module **128,** rear wheels **116,** rear skirt **118,** handle **120** and cleaning hose **122.** The frame **102** also includes one or more internal storage tanks or storing volumes for storing water, disinfecting solutions (i.e., bleach, soap, cleaning liquid, etc.), debris (dirt), and dirty water. More information on the cleaning device **100** is further disclosed in PCT publication WO2016/168944, entitled "APPARATUS AND METHODS FOR SEMI-AUTONOMOUS CLEANING OF SURFACES" filed on April 25, 2016 which is incorporated herein by reference in its entirety.

More particularly, in this embodiment, the front sensing module 114 further comprise structured light sensors in a vertical and horizontal mounting position, an active stereo sensor and a RGB camera. The rear sensing module **128,** as seen in **FIG. 3****,** consists of a rear optical camera. In further embodiments, front and rear sensing modules **114** and **128** may also include other sensors including one or more optical camera, thermal cameras, LiDAR (Light Detection and Ranging), structured light sensors, active stereo sensors (for 3D) and RGB cameras, etc.

The back view of a semi-autonomous cleaning device **100,** as seen in **FIG. 3****,** further shows frame **102,** cleaning hose **122,** clean water tank **130,** clean water fill port **132,** rear skirt **118,** strobe light 110 and electronic system **106.** Electronic system **106** further comprises display **134** which can be either a static display or touchscreen display. Rear skirt **118** consists of a squeegee head or rubber blade that engages the floor surface along which the cleaning device **100** travels and channels debris towards the cleaning assembly **108.**

**FIG. 3** further includes emergency stop button **124** which consists of a big red button, a device power switch button **126** and a rear sensing module **128.** Rear sensing module **128** further comprises an optical camera that is positioned to sense the rear of device **100.** This complements with the front sensing module **114** which provides view and direction of the front of device **100,** which work together to sense obstacles and obstructions.

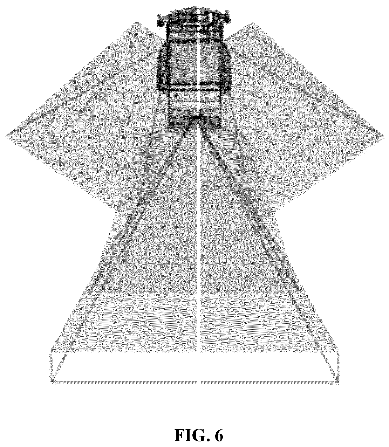

**FIG.6** is a top planar view of a semi-autonomous cleaning device with improved sensing. The exemplary embodiment addresses the issues associated with improved sensing by relying on a hybrid system of two different sensing modalities (front sensing module **114** and rear sensing module **128)** and switching between them based on environmental suitability and integrating information in time and relying on semantic information to make decisions regarding the existence or absence of cliffs and obstacles.

### Improved Sensing:

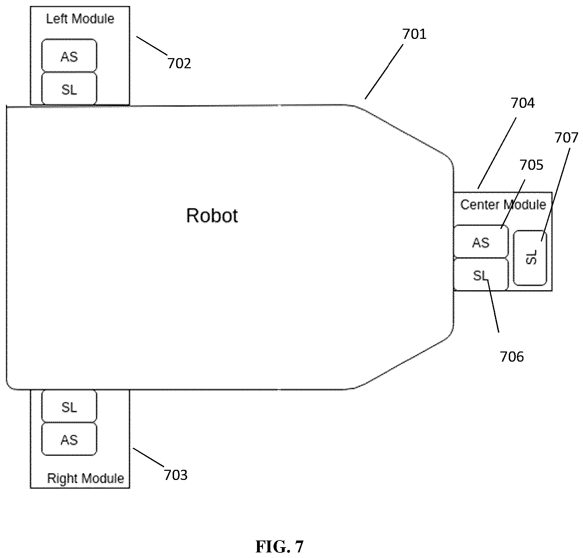

**FIG.7** is a **block diagram** illustrating a hybrid sensing solution. The sensing systems are configured in the approximate positions relative to the cleaning device **701.** As previously seen in **FIG. 6****,** the hybrid sensing solution relies on 3 sensing "Modules" shown as **702, 703,704,** each comprised of 3D cameras from two modalities: Active Stereo (AS) and Structured Lighting (SL).

According to **FIG. 7****,** the modules are as follows:
**Right Module 703:** 1 Active Stereo (RealSense D435), 1 or more Structured Lighting (Orbbec Astra Mini)
**Center Module 704:** 1 Active Stereo (RealSense D435), 1 or more Structured Lighting (Orbbec Astra Mini)
**Left Module 705:** 1 Active Stereo (RealSense D435), 1 or more Structured Lighting (Orbbec Astra Mini)

The cameras are positioned so that each modality could cover 270 degrees around the cleaning head, giving the robot full coverage across all possible motions. Such visual coverage is required so that when the robot is required to move in any one of a forward direction, a right turning direction, a left turning direction, or any combination of these vectors, the robot will have the ability to detect obstacles or abnormalities in the environment in those directions. These obstacles can be detected over the vertical range from the ground up to robot height. The System switches between any combination of cameras based on the configuration, available cameras, system resource usage, operator settings, plan settings, and environmental factors.

The hybrid sensing solution as seen in **FIG. 6** **and** **FIG. 7** provides several advantages, including the ability to automatically select between different types of 3D visioning systems. Structured lighting systems project at least one known image into the measurement field, for example a matrix of dots, grids or bars, and then measure the distance to each feature using a stereoscopic camera system. Structured lighting systems have specific advantages in that they are highly accurate in building a 3D model of the environment, and work very effectively in poorly lit environments. Structured lighting systems also are less susceptible to many types of problems associated with detecting edges of artifacts with passive lighting systems, such as Active Stereo systems, Structured lighting produces well defined edges with which to compute the range to each environmental artifact.

Further complicating the problem of artifact detection for a robot, is that variable lighting in the environment can render one or both detection systems less useful, for example in dark areas, a passive stereo image detection system has much more difficulty detecting objects. Similarly, in extremely bright areas such as direct sunlight, the Active Stereo systems may have difficulty distinguishing the projected grid in the bright ambient light. Aspects of the current invention address both of these failings of traditional single sensor systems.

A further complication can arise from the interaction between the structured lighting system and the stereo image detection system. An aspect of the current invention is to avoid such interactions by shifting the light frequency that is being used for each system, for example using infrared for the structured lighting system and visual optical for the active stereo system. Another embodiment of the current system multiplexes the camera systems in time, such that the systems take turns measuring the environment. If either camera system shows evidence that is correlated with compromised detection, the frequency of operation of the alternate, non-compromised camera system can be increased.

Using both detection systems in parallel can improve the effectiveness of the environmental detection system. In addition, the camera systems normally feed into a system that identifies in a 3D grid around the robot, where detected artifacts are located. The artifact identifications from each detection system can be combined, and also combined with probability information indicating to what degree each detection system may have been compromised.

The current system further improves on simple detection systems by integrating information over multiple cameras at multiple times in different ways. The information from multiple detection systems can be combined locally in 3D cells via the voxel grid. This provides a composite model map of detected environmental artifacts and provides a mechanism to evaluate the superset of environmental artifacts for further processing.

Another system that can be used is to globally merge the images to create a ground plane of navigable space for those vertical slices that do not contain obstacle artifacts. In addition, the detected artifacts can be compared to known artifacts in the environment and obstacles can be semantically identified using per frame reflection.

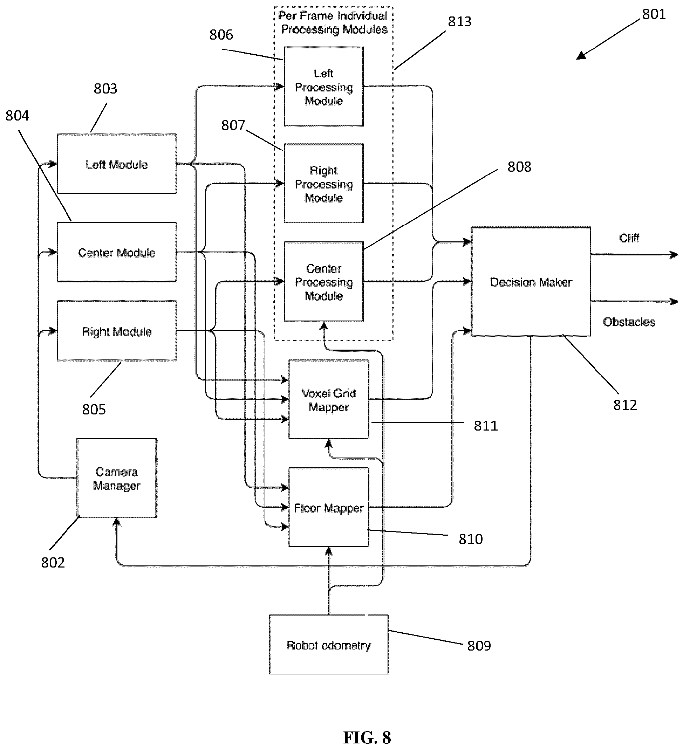

**FIG.8** is a block diagram illustrating an exemplary software architecture. The solution consists of a system that integrates data over time from all the modules to build a representation of the 3D world around the robot and uses it to make decisions about cliffs and obstacles.

Referring to **FIG. 8****,** in the sensing and decision making subsystem **801,** the camera manager 802 controls the streaming of the cameras and dictates how and when frames are captured from the individual camera within the sensor modules **803, 804, 805.** In one embodiment, only one of the sensor modalities would be streaming at a given time while the other is in an idle standby state. The default modality is selected according to certain environment criteria such proximity to large windows and time of the day. These criteria could be provided by user metadata associated with certain regions upon entering which the system transitions to the preferred modality. Alternatively, the system would transition automatically to the preferred sensor modality by analyzing the input images. Alternatively, the system may also include additional sensors used to perform advanced diagnostics, including a Bluetooth^{®} device, a WiFi^{®} modem and / or cellular phone or modem
Furthermore, the manager provides the ability to capture individual frames from the non-selected or idle sensors in order to provide additional contextual information regarding potential ambiguities, for example regarding positive and negative detections. These modules **806, 807, 808** are shown in Per Frame Individual Processing Modules **813.** In some embodiments, the secondary camera systems can be interrogated to provide additional information that can resolve an unexpected detection result, like a visual detection result that is inconsistent with the preprogrammed floor plan over which the cleaning device is navigating. The floor plan mapper is shown as module **810.** Similarly, the Voxel Grid Mapper is shown as module **811.** In complex sensing environments, particularly in environments that include obstacles that can change location from time to time, the resolution of false positives and false negatives is a paramount concern for both safety and for efficient operation. The environment is further complicated by the potential for variable lighting or variable surface reflectivity. The results of the processing modules are fed to the Decision Maker module **812.**

As an example of automatically resolving a false detection of a cliff, it may be sensed by a forward sensor, that the observable surface is detected as being far away. The detection of range can be accomplished by detecting the focus distance at which features become sharpest, or many other algorithmic methods that are well known in the art. The detection of a far away or distance surface can often indicate that a cliff is present, such as the entry to a manual stairway. Usually such cliffs are to be avoided lest the cleaning robot fall from the cliff and cause injury or damage. Several possible optical situations can cause a false cliff detection, for example a particularly reflective floor, water pooling, thermal gradient optical effects, or saturation light conditions. In all of these conditions, analysis of whether a false cliff is detected can be resolved by evaluating the size of the feature detected and comparing to both the floor plan stored in memory and to the secondary sensor system that operates on different detection principles to confirm or refute the presence of the cliff.

Majority or probabilistic logic can then be employed to determine if the initial detection was false or has even a small probability of being correct. In addition, the actions taken on such a detection can be to a) act directly on the logic and assume the false detection, b) send an alert to an operator or logging system, or c) pause and wait for manual or remote approval to continue or d) employ a tentative or exploratory motion toward the detected obstacle. Similar false positive detection logic can be used for detected obstacles, including detected reflective obstacles.

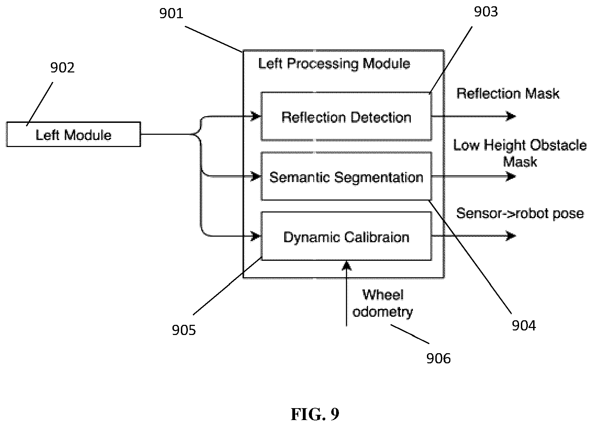

**FIG.9** is a block diagram illustrating an individual processing module **901.** As seen in **FIG. 9****,** the data from each of the left / right / center camera is fed into a set of processing units **903, 904, 905.** Within the Left Processing Module **902,** there exist three main components:
- **Reflection Detection 903:** detects areas of high specular reflection in the image. These areas are likely to have no depth or erroneous depth from both stereoscopic and structure lighting cameras. The output of this unit is a binary mask of reflection areas.
- **Semantic Segmentation 904:** consists of a deep neural network. In one embodiment, the neural network runs on an external USB stick (such as the Intel Movidius Compute Stick or Google Coral Accelerator). The input to this network is the RGB and depth data coming from the camera and the output is a segmentation of the image into ground non-ground areas.
- **Dynamic Calibration 905:** Cameras mounted to the robot frame can still exhibit changes in position relative to their original position, over time. The Dynamic Calibration component is an automatic online method to correct the calibration values for these factors that change over time.

The **Dynamic Calibration 905** component works as follow: for pitch, roll and height calibration, values can be estimated based on the ground plane. Calibration mode can be automatically selected as the robot is moving, and is in a good instance of ground plane where the plane is not too noisy and of sufficient size. If the change in calibration exceeds threshold, use the selected data to recalibrate. The offset calibration can be stored in memory and used until the next calibration event.

For Yaw, x, y calibration, values can be estimated based on the consistency with the 2D motion of the robot. Aligning with Lidar at LIDAR height (should match the depth cloud via ICP) and selected via threshold for niceness. The calibration proceeds by computing RGB-D odometry and estimating the yaw, x and y values that best align the computed odometry with the robot wheel odometry 906. An alternative approach is to align a slice of the observed depth data at LIDAR height (the device is equipped with a 2D LIDAR unit) with the LIDAR data across a set of selected images.

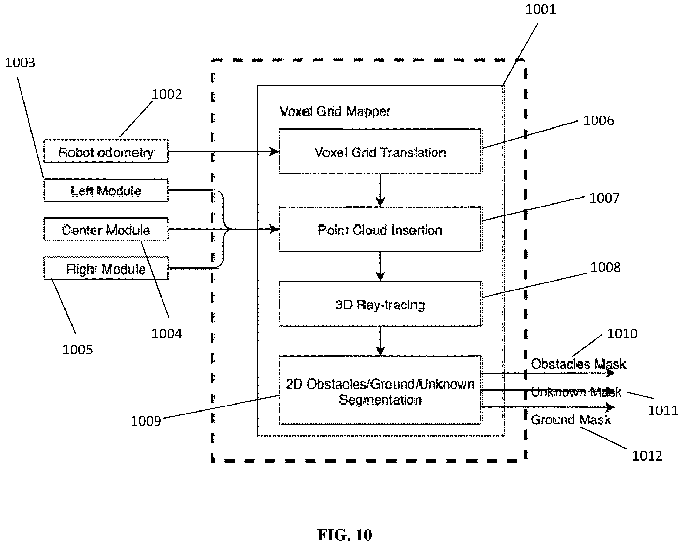

**FIG.10** is a block diagram illustrating a Voxel Grid Mapper module. The Voxel Grid Mapper module **1001** builds a 3D voxel grid by fusing data from the camera using ray tracing and probabilistic update. The output of this mapper is then a segmentation of the space around the robot into Ground, Obstacle and Unknown Areas.

Components of the Voxel Grid Mapper module **1001** of **FIG. 10****,** consists of such components as:
- Voxel Grid Translation **1006:** The voxel grid only represents a certain range of 3d space around the robot. For each input frame, it has to be translated to the current robot position.
- Point Cloud Insertion **1007:** Update the voxel grid by the current input point cloud probabilistically.
- 3D Ray-tracing **1008:** Ray-tracing from current hit voxels to camera position probabilistically to update voxel grid with free space values.
- 2D Obstacles / Ground / Unknown Segmentation **1009:** Project all occupied voxels to z=0 and segment it to obstacles **1010,** ground mask **1012** and unknown mask **1011,** thus producing a revised path map that may in turn be used for cleaning path alteration.

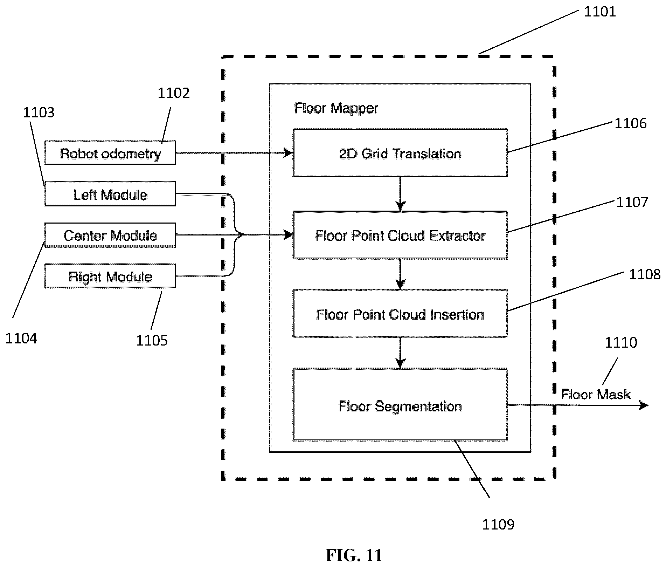

**FIG.11** is a block diagram illustrating a Floor Mapper module **1101.** The Floor Mapper module **1101** builds a representation of the ground plane with a larger extent than the 3D voxel grid by probabilistically merging ground planes estimates from all frames **1103, 1104, 1105** according to robot odometry **1102.** The output of this mapper is a segmentation of the space around the robot into Ground and Non Ground Areas.

Components of this module is as follows:
- **2D Grid Translation 1106:** Floor mapper is using a 2D grid to represent a certain range of 2d floor space around the robot. For each input frame, it can be translated to the current robot position
- **Floor Point Cloud Extractor 1107:** A plane detecting algorithm from opencv::rgbd is used to find the floor of the current input. The points on the floor is used to update the floor 2D grid
- **Floor Point Cloud Insertion 1108:** Updates the floor 2D grid by floor point cloud which are extracted by floor point cloud extractor
- **Floor Segmentation 1109:** Segments the floor 2D grid to a floor mask **1110.**

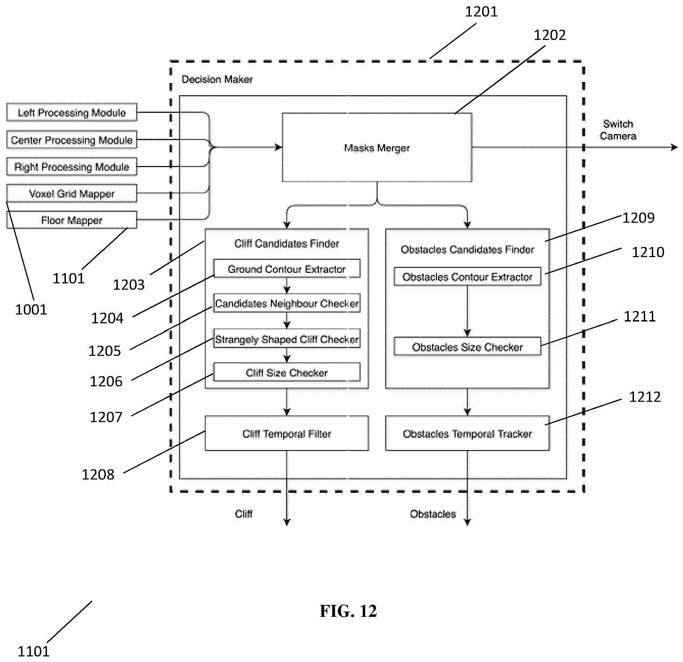

**FIG. 12** is a block diagram illustrating a Decision Maker module **1201.** In one embodiment, The Decision Maker module 1201 receives the outputs of the Floor Mapper module **1101 (****FIG. 11****),** Voxel Grid Mapper module **1001** (**FIG. 10**) and the individual processing modules including the Left Processing Module **806,** Right Processing Module **807,** and Centre Processing Module **808** (**FIG. 8**)**.** The Decision Maker module **1201** applies a set of rules on all these outputs to decide which areas a True Obstacle / Cliff Positives. The rules involve both semantic information about cliffs (shape, relative placements with respect to neighboring obstacles) as well as consistency of information across its different inputs.

Additionally, the Decision Maker module **1201** determines if images from the alternative sensor modality need to be checked. Examples are in situations where there are a lot of missing depth areas from the SL sensors which could indicate either a cliff or a false negative due to an unobservable material. Another example could be a measurement that is not consistent with the models built from previous data. In such cases the Decision Maker module **1201** would request another frame the alternative Sensor and triggers the Processing Pipeline to process it accordingly.

According to **FIG. 12****,** the components of this module consists of:
- **Masks Merger 1202:** Merges masks from Voxel Grid Mapper module **1001,** Floor Mapper module **1101** and Processing module 901 together and generates new obstacles mask, ground mask, and unknown mask. The output of the masks merger is fed into Cliff Finder and an Obstacle Finder whose components are described below.
- **Cliff Candidates Finder 1203:** Filters the cliff candidates and rejects ones that do not pass a series of checks.
- **Ground Contour Extractor 1204:** Extracts the contour of ground mask as cliff candidates
- **Candidates Neighbour Checker 1205:** Cliff candidates should only be adjacent with ground and unknown area
- **Strangely Shaped Cliff Checker 1206:** Cliff candidates should be adjacent with regular shaped unknown area
- **Cliff Size Checker 1207:** Filters out too small sized cliff
- **Obstacles Candidates Finder 1209:** Filters the obstacle candidates and rejects ones that do not pass a series of checks.
- **Obstacle Contour Extractor 1210:** Extracts the contour of obstacle mask as obstacle candidates
- **Obstacles Size Checker 1211:** Filters out obstacles that are too small
- **Cliff Temporal Filter 1208:** The Cliff Temporal Filter tracks the boundaries of the detected cliffs in time. True cliffs should be static with respect to the relative motion of the robot.
- **Obstacles Temporal Tracker 1212:** Tracks the pose and velocity of each obstacle relative to the robot and classifies them into static and dynamic obstacles

### Smart Alerts:

An autonomous or semi-autonomous device for cleaning or other purposes, using an onboard energy source, a combination of actuators to move around its environment, sensors to detect the environment and proximity to various landmarks, one or more computers with internal state machines in memory which transitions based on the detected features of the environment and registers accumulating the completion of tasks, a file of customizable configurations, and a set of commands from the user, a digital-to-analog or equivalent audio peripheral interface device with audio signal-producing capability of a certain bit rate and frequency, and a sound-emitting device such as a loudspeaker, microphone, audible announcements in the language of the locale, made at specific state transitions or continuously in specific states of the machine's operation.

These can have a hysteresis such that the same message is not repeated unnecessarily which may confuse operators or nearby persons. The historical sequence of messages is maintained and analyzed to produce a set of consistent and natural-sounding outputs, so that the device's intent can be effectively comprehended by nearby operators to facilitate either further interactions with the device, or warn them to stay clear at an effective volume. The decibel level can be adjusted based on the ambient sound levels and other configurations, to the point of being silent in designated zones such as quiet zones in hospitals.

The device can signal intent, arrival at unique destinations, and other situations which need to inform nearby operators or users of the state of the device. For example, when the device is experiencing some mode of failure which requires human intervention on-site, the device can emit sounds and lights which correspond to the particular failure to facilitate resolution of the problem.

When the device travels in reverse, the device can, for example, automatically initiate a periodic beeping sound produced through the speakers. Other tones or sequences of tones can be produced to signify intent, such as the intent to perform various actions like cleaning. In addition to loudspeakers, the device is also outfitted with graphical user interface screen capable of producing rich colours, text, and animation, and other computer-controlled light emitters and illuminated arrays, augment the signaling capabilities of the device. In further embodiments, smart alerts could also include videos of state transitions or state like cleaning head lowering, and warning regarding device about to turn.

These screens and audio annunciators can signify machine intent that mimics a wide variety of anthropomorphized interactions, to assist in making the semi-autonomous machine in being less threatening and communicating next actions more clearly. For example, if the cleaning robot intends to turn left, eyes pictured on the robot's display could point to the left to help observers predict the next action. Similarly, audio signals can indicate intent, or observations about the environment, or general messages promoting cleanliness or facility policy.

The various operating states of the device coincide with the display generated on a graphical user interface which can provide graphical depictions of these states, including processing, cleaning, being stuck, being in a failure mode, being in a remote teleoperation state, as examples of states which the device is in. This user interface is also useful for indicating the status of various hardware and software components, such as in a diagnostic and a command-and-control capacity by displaying measures such as toggles, metrics, set-points, calibration parameters, and the like.

Blinking and solid lights to indicate the direction of travel, automatically triggered on the activation or projection of a change in direction on the incoming path. These paths can be computed in advance or in real-time based on immediate sensor feedback. Different regions of the map, or ambient light sensor measured light intensity, can trigger different patterns or luminosity suitable for the circumstance.

Colour coded strobe lights can indicate the future path of travel. Brake lights automatically turning on either in a solid or blinking fashion to indicate differing rates of stopping, when the device senses obstructions or is about to slow down, and turning off when the obstruction is removed and the device speeds up. The arrangement of lights is in the rear of the device, with at least two or three lights at various positions and elevations which can be visible from afar in potentially dusty environments, and from afar for operators of other large equipment such as forklifts and trucks. These can be operated through the computer and control boards.

Colour coding of lights to indicate the modality of operation, including mapping, cleaning, warning, emergency, awaiting operator input, and other functions. The lights can be animated in intensity and in the sequencing to indicate motions resembling hand gestures, etc.

### Expandability Platform:

In further embodiments, the autonomous or semi-autonomous cleaning device may include a platform for expandability as a multi-purpose intelligent system. In one embodiment, the system payload bay will allow for future sensor add-ons. Further features of the expandability platform may include:
- modular frame components
- modular software
- thermal cameras
- future sensor add-on
- well defined interfaces
- install software from cloud to robot
- security module
- app store module, publish API, appstore push app centrally
- centralized fleet management
- open API module
- disinfection module

### Side Sweeper Component:

Floor scrubbing robots cannot often clean directly adjacent to walls and other objects, due to the risk of damage to walls and objects from rigid components which support the scrubbing device, and due to the requirement by most operators that dispensed cleaning liquid be collected (usually by a device wider than the cleaning device). As a result, floor areas adjacent to walls and other objects go uncleaned.

When cleaning with a floor scrubbing machine, manual labour is required to sweep and mop ("dust mopping" and "trail mopping") along walls and between the scrubber and obstacles. This is due to the distance between the scrubber, and the wall along which it is driving. In some instances, performing dust mopping and trail mopping is unaffordable. Additionally, when dust mopping is not performed, or is performed poorly, floor scrubber performance can be negatively affected.

Reducing the need for dust mopping by collecting debris improves facility cleanliness, and reduces labour required; removing debris near walls and obstacles (whose presence will accelerate the development of stains) reduces the need for trail mopping. At a constant wall distance, the proportion of a floor that remains uncleaned increases as sector width decreases. As a result, the side sweeper will provide the greatest benefit to operators who intend to operate the cleaning device in "corridor" style environments which have long, narrow cleaning sectors.

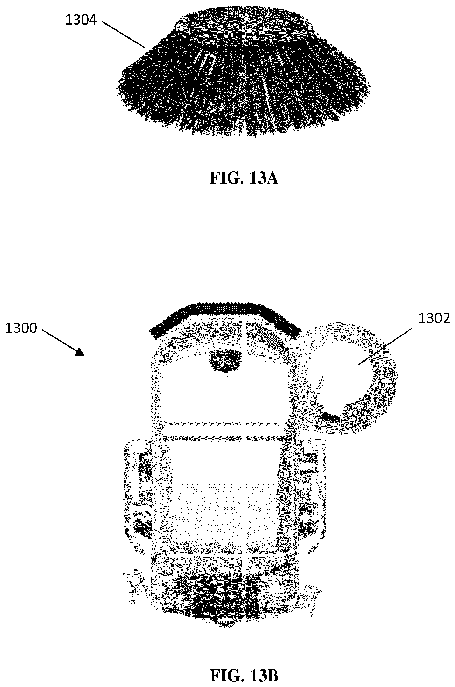

**FIG. 13A** is a perspective view of a side sweeper. The side sweeper is a cone-shaped brush **1304,** which can be affixed to the right hand side of floor scrubbing cleaning device that is fitted with a 32" cylindrical cleaning heads. The side sweeper covers some or all of the distance between the floor scrubbing machine, and nearby walls/obstacles. The sweeper brings small debris into the main cleaning path of the floor scrubbing machine, where it can be collected by the cylindrical brushes, and deposited into the primary debris bin.

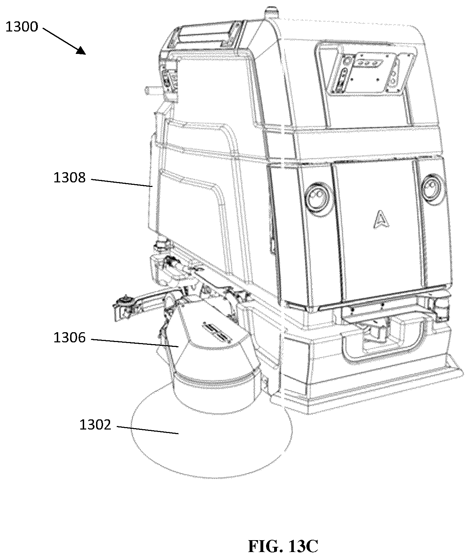

**FIG. 13B** is a top plan view of a semi-autonomous cleaning device **1300** with a side sweeper module **1302.** **FIG. 13C** is a perspective view of a semi-autonomous cleaning device **1300** with a side sweeper module **1304.** The side sweeper module **1302** consists of a conical brush **1304,** mounted to the front, right hand corner of the semi-autonomous cleaning device **1300.** The brush **1304** rotates counterclockwise (as viewed from above) about an axis approximately perpendicular to the floor surface. In alternate embodiments, the brush may rotate clockwise and mounted on the front, left hand corner. Side sweeper module **1302** is mechanically coupled to the frame **1308** of the cleaning device **1300** by a mechanical arm **1206.**

Debris contact by the brush is pushed toward the robot centre, and into the primary cleaning path of the machine to which it is attached. There, debris can be swept by cylindrical brushes into a debris bin for later disposal. Relatively large and heavy debris can be captured by the spinning sweeper.

The side sweeper module **1302** component consists of the following features:
- **Brushes:** Brush with long bristles with the ability to deform, the length provides a buffer against variations in robot position and localization when avoiding collisions with obstacles in close proximity to the robot.
- **Mechanical Compliance During Impact:** The arm complies physically in order to protect itself and pedestrians / other objects in the event of an accidental impact. Springs keep mechanism in alignment (self-centering), dampen the force of any impacts. Wired to e-stop. End-stop bumper reduces rubbing friction and impact force of the moving mechanism, keeping it from damaging the main body.
- **Shroud:** Taper in shroud's back-side increases likelihood of e-stop mechanism working in event of collision at 90 degree angle. E-stop normally triggers when force imparted either in direction of or opposite of travel, however side sweeper design allows more directions of travel or impact to be detected for safety purposes. Shroud also provides entanglement protection from shrink wrap, ropes, strings, (plastic/poly/etc.) strapping for shipping, other long thin flexible items.
- **Layout:** Side sweeper mounting components are longitudinally oriented in the primary direction of robot travel (forward). Retrofittable - may be installed on suitable robots already deployed, in situ. Can be removed to restore base functionality of the robot.
- **Electrical:** Fused, connectorized, bypassable. Cables, plastic, motors designed for IPX4 protection. All electrical components are passive, which reduces the complexity and increases the reliability of the sidesweeper module. Additional grounding is provided to the sidesweeper assembly which allows static electricity buildup on the robot to be discharged back to the ground.
- **Brush Rotational Motion:** The particular rotational speed and angle of brush was determined to have optimal performance for removing side debris. A thorough testing process was established to determine the optimal configuration.
- **Autonomous Path Planning for Side Sweeper Coverage:** Presence of side sweeper can automatically alter the coverage path planning and safety considerations as appropriate. Spiral paths of side sweeper automatically calculated to ensure the path of the side sweeper is kept in the uncleaned portion of the workspace, such that the primary scrubbing mechanism will cover the trail of the side sweeper, ensuring that scrubbing performance is not negatively affected by the side sweeper's presence. Side sweeper mechanism can be raised off the ground in manual and autonomous modes when not cleaning to avoid leaving a trail of debris on the travelled portion of the floor. This can be used in conjunction with non-scrubbing zones to perform selective sweeping and scrubbing during autonomous operation. Side sweeper improves how close the robot cleaning path is to obstacles.
- **Teleoperation Remote Monitoring View and Reports:** A dual report is generated that indicates which areas were brushed clean, and what areas were scrubbed for every cleaning run. The display of the robot 2-D / 3-D visualization model is changed to include the side sweeper, footprint geometry, configuration, etc. based on the installation of the side sweeper.
- **Safety:** HARA findings and improvements to side sweeper to be optionally added
- **Side sweeper obstacle detection coordination with camera FOV:** RGB / 3-D sensors can account for side sweeper presence via masking using an image processing pipeline to avoid false obstacle detections in the software safety system of the robot that interrupt the autonomous cleaning.
- **Automatically-customized behaviour based on presence of side sweeper attachment:** Alternative implementation would allow automatic detection of the installation of the side sweeper mechanism via electromechanical sensing to automatically adjust the behaviour of the robot to account for the side sweeper apparatus, such as cleaning paths, wall distances, safety, reporting, and similar.

### Advanced Diagnostics:

Detection of failures of motors and actuators, and of components or systems generally, is a concern. This application describes a system where one can command a motor or actuator and then look for corroborating feedback from that motor or actuator or some other actuator to verify the command was successful. Independent instruments can be crosschecked to determine failure of any one of the instruments, the sensors and actuators in a semi-autonomous cleaning device can be crosschecked to identify failures as well. Essentially, a stimulus-response mechanism may be employed where a stimulus to one or more components or subsystems may generate responses in one or more component or subsystem measurements. These stimuli and measurements may be initiated, received, stored and correlated on the semi-autonomous vehicle itself in an advanced diagnostics module, may be sent to a central server for storage and correlation, or may employ a hybrid approach. In addition, failures of instrumentation or actuation systems may result in an immediate change of machine or subsystem state to ensure the safest possible mode of operation. For example, if a drive motor or optical sensor system is found to be improperly functioning, the robot may enter a safe mode where movement is disabled.

The central server may employ simple algorithmic or heuristic rules to correlate stimuli with measurements and thereby determine present failure conditions, potential future failure conditions or likelihoods of future failures. Alternatively, the central server may employ a machine learning or artificial intelligence subsystem to perform these analyses. For these correlations and predictions, the central server may rely on historical data or data trends from a single or multiple semi-autonomous vehicles.

The central server may perform an action based on these correlations, such as displaying a relevant message to the user, updating information in a central database, ordering replacement parts in anticipation of failure, or taking some other action. In taking these actions, confidence in the performance and reliability of the system is maximized, as is the uptime of the system.

An exemplar implementation of this system would be a diagnostic system around dropping a squeegee down. From a system point of view, there is a squeegee motor and a vacuum motor. The squeegee may be in the up (undeployed) position or state, or down (deployed) position or state; and may be commanded by the control system to move from one state to the other. This command is translated into squeegee motor currents. The initiation of vacuuming may be controlled by controlling vacuum motor currents. The currents of both of these motors may be measured when they are engaged by a measuring system. Using these measurements and the squeegee position, a failure or later anticipated failure may be detected or predicted. In these cases, the motors would be components under test, receiving the stimulus of a control current. The timing of the squeegee motor turning on and off, relative to the commands sent to turn it on and off, may indicate motor failure. The timing of the vacuum turning on when commanded may indicate vacuum failure. The vacuum current measured while the squeegee is in the up position may indicate hose blockage if the current is outside a normal range. A lack of change in vacuum current as the squeegee supposedly moved from the up to the down position may indicate a missing squeegee, hose blockage or squeegee motor failure.

The regular operation mode of the system may be ascertained in some cases by running motors in open-loop configuration to detect dirt or expected damage. During regular cleaning operation, a change in vacuum current may indicate a failure condition - a sudden decrease in current may indicate the squeegee has fallen off, while a sudden increase in current may indicate the squeegee hose has become blocked.

Other system currents and measurements which may be monitored include such actuator currents as brush motor current, cleaning head lift motor current, vacuum current, squeegee motor current, drive motor current, steering motor current, water pump current, back wheel encoders, steering wheel encoders or IMU data. Brush over currents, or divergences between the currents on multiple brush motors, may detect cleaning faults. Loss of communications, protocol violations or latency violations on an internal or inter-system bus may indicate a failure of a particular system.

In one implementation, this information may be fed into a machine learning model which may be used to determine the likelihood of specific failures. Such failures may include a missing cleaning brush, a broken cleaning brush belt, actuator failure, a missing squeegee, vacuum hose blockage, water contamination, or encoder failure.

### Health Monitor:

In a further embodiment, a Health Monitor node or module is created. The Health Monitor module will monitor for any new conditions not already monitored. The Health Monitor module will publish diagnostics messages which are captured by the Diagnostics Collector module and fed into the Diagnostic AggregatorSafety MonitorExecutive / UI pipeline for action and reporting purposes. For this stage, the existing UI is modified to display a "warning", instead of "safety error", when abnormal operating conditions are detected by the Health Monitor module.

All preexisting conditions continue to result in an error message displayed in the user interface (UI) when abnormal operation are detected. Otherwise, the functionality of the Safety Monitor / UI pipeline remains unchanged.

Longer term, the non-critical conditions monitored in the system, as well as associated actions and reporting functions will be shifted to the Health Monitor module. The critical conditions (i.e., anything that can result in personal injury or property damage) will be the subject of a simpler Safety Monitor module that will act to augment a safety board.

The Health Monitor module is implemented using Health Monitor classes. As an example, the HMNode instantiates Monitor classes in priority order, subscribes to topics that need monitoring, notifies the interested monitors when new messages are available (not all monitors are interested in all messages) and periodically calls Check() on each monitor, in order of their priority. Each monitor implements Check() and tells the HMNode if its monitored condition is in a normal or abnormal status via a diagnostics.msg reference.

Further, the HMNode publishes a periodic diagnostics message that will be processed by the existing safety pipeline / UI starting with the Diagnostics Collector. Even though a priority handling mechanism is built into the framework, given that the robot reaction is the same for all encountered conditions, the same priority has been assigned to all conditions for the time being.

### Fault Detection:

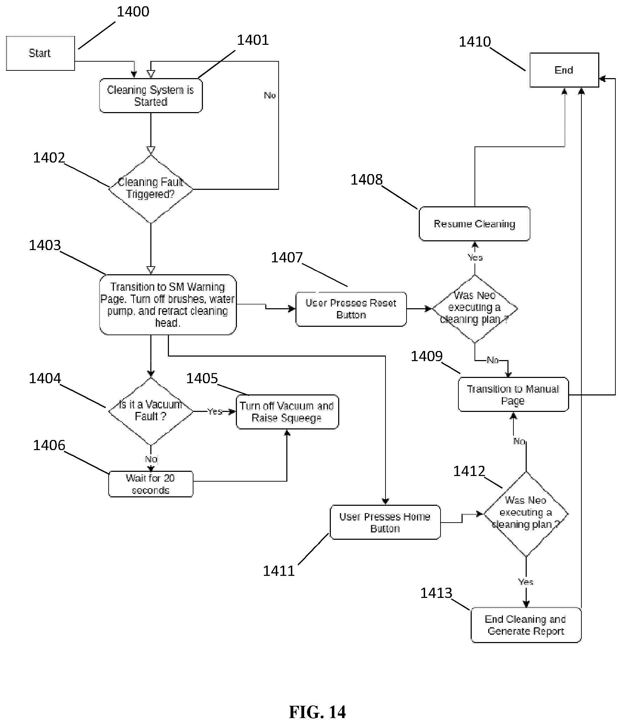

**FIG.14** is a flow chart illustrating detection of a cleaning fault detection system. According to FIG. 14, the cleaning system is started at block **1400.** The cleaning system is started and monitors for a cleaning fault at block **1401.** If a cleaning fault is triggered at block **1402,** the system transitions to a warning page and turns off the brushes, water pump and retracts the cleaning head at block **1403.** The system also determines whether the fault is a vacuum fault at block **1404.** If yes, then turn off the vacuum and raise the squeegee at block **1405.** If no, wait for 20 seconds then turn off the vacuum and raise the squeegee at block **1406.**

At the warning page at block **1403,** if the user presses the reset button at block **1407,** the system checks to see if a cleaning plan was executed. If so, resume cleaning at block **1408** until the flow chart concludes at block **1410,** Otherwise, the system will transition to a manual plan at block **1409.**

At the warning page at block **1403,** if the user presses the home button at block 1411, the system checks to see if a cleaning plan was executed at block **1412.** If so, the system ends the cleaning and generates a report at block **1413.** Otherwise, the system will transition to a manual plan 1409. The method concludes at block 1410.

### Squeegee Detection:

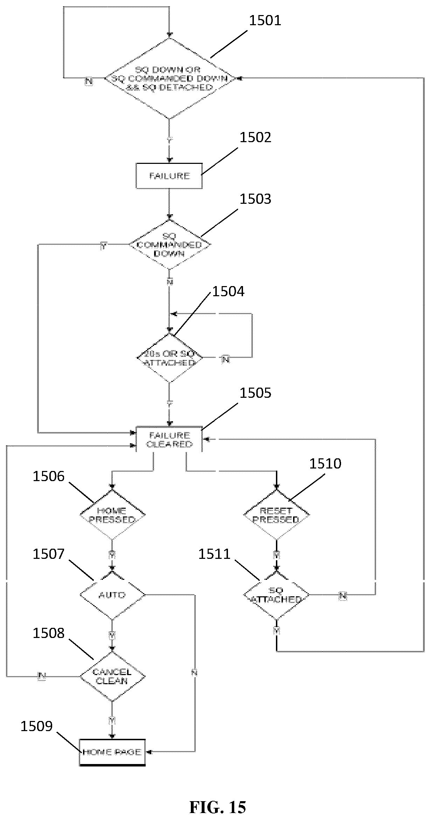

In a further embodiment, the system has a method and module to detect a squeegee fault. **FIG. 15** is a flow chart illustrating a detection of a squeegee fault. According to **FIG. 15****,** SQ DOWN means that squeegee is lowered (down) and SQ COMMANDED DOWN means the squeegee is UP and the vacuum button is pressed (which also commands the squeegee to lower) in the case where the squeegee is up and the squeegee is detached and the vacuum button is pressed, the failure screen will be displayed without turning on the vacuum and lowering the squeegee also in this case the screen will display "warning cleared" immediately, without waiting for 20 seconds.

Referring to **FIG. 15****,** a SQ DOWN or SW COMMANDED DOWN or SQ DETACHED events is detected at block **1501.** The system confirms whether this is a FAILURE event at block **1502.** The system then checks whether it is a SQ COMMANDED DOWN event at block **1503** and then moves to a FAILURE CLEARED event at block **1505.** If it is not a SQ COMMANDED DOWN event at block **1503,** the system checks for a 20s or SQ ATTACHED event at block **1504** where it then moves to the FAILURE CLEARED event at block **1505.**

At the FAILURE CLEARED event at block **1505,** the system checks if a HOME PRESSED button (Home button pressed) event at block **1506,** AUTO event at block **1507,** and CANCEL CLEAN event at block **1508.** If these events occur, then the system will return to the home page at block **1509.**

Returning to the FAILURE CLEARED event at block **1505,** the system checks if a RESET PRESSED (RESET button pressed) evet at block **1510,** and SQ ATTACHED event at block **1511.** If these events occur, then the system will return the beginning for monitoring of SQ DOWN or SW COMMANDED DOWN or SQ DETACHED events at block **1501.**

### Mechanical System:

Further embodiments of the cleaning device include mechanical system that include a front wheel assembly and cleaning head control. The front wheel assembly includes a further Drive Flex cable management system.

The cleaning head control system further includes the following features:
- Current is used to infer the downward force. PID loops are employed to maintain constant downward force.
- For sweeping action, position feedback from the Cleaning Head Lift actuator is employed to target a constant position. After running characterization tests, optimum distance which maximises the cleaning performance is determined and improved performance with brush wear.
- The control system also implements a "compromise mode" wherein it senses that the brushes have worn / disfigured and hence it maximises on downward force that it can apply.
- All cleaning actuators (brush motors, lift motors, vacuum, pump) are closed loop and feedbacks can be employed for self-diagnostics, motor stuck, loss of electrical connectivity, over current, divergence among the brushes, missing brushes, etc.

### Electrical System:

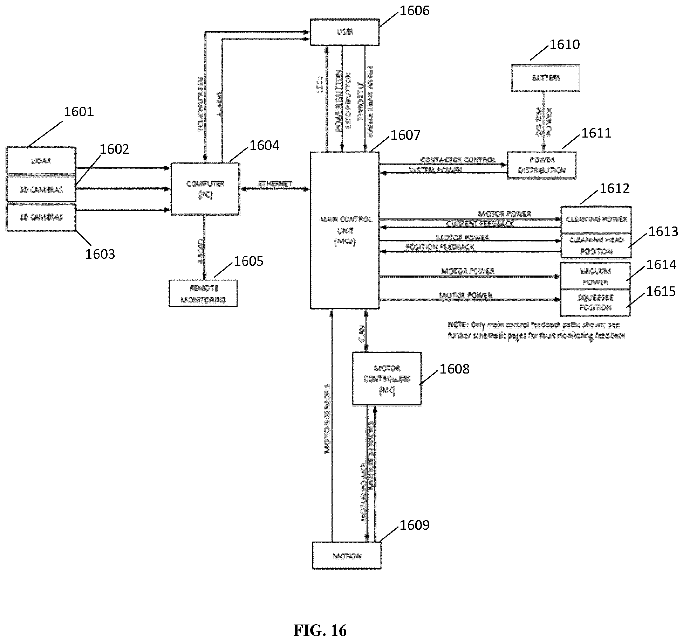

**FIG.16** is a block diagram illustrating an exemplary electrical system for a semi-autonomous cleaning device.

Some features of the electrical system include the following:
- LIDAR **1601,** 3D Cameras **1602** and 2D Camera **1603** modules
- Main Computer (PC) **1604**
- Remote Monitoring module **1605**
- User Input module **1606**
- Main Control Unit (MCU) module **1607** for high power distribution to cleaning system as well as regular control functions. The Main Control Unit (MCU) provides robust down-stream circuit protection
- Motor Controllers (MC) **1608** that is replaceable, self-contained motor controller module for easy field service
- Battery **1610**
- Power Distribution module **1611**
- Cleaning Power module **1612**
- Cleaning Head Position module **1613**
- Vacuum Power module **1614**
- Squeegee Position module **1615**
- Squeegee disconnect detection
   ∘ Fault detection of whether the rear squeegee has been disconnected from the mounting point
- Forced air cooling through rear cabinet based on computer exhaust temperature
   ∘ Uses thermostat to control airflow based on computer exhaust temperature
   ∘ increases cooling and therefore CPU processing capability
- Multi-layered / redundant motion control monitoring (Motor controllers, MCU FW, SW all provide checks on expected motion)
- Audio cues for autonomous cleaning
- Collection of environmental data to determine suitability of cleaning plan environment
   ∘ using the environment sensor to determine if using the robot in an environment which is too hot
- Distributed LED control
   ∘ Use the Halo PCBs as the controller for other forward LEDs
- LED 'eyes' as directional indicators
   ∘ Use groups of LEDs on the Halo PCBs to indicate robot's intended motion
- Vacuum obstruction detection
   ∘ Detect changes in vacuum current to determine if obstruction is present
- Water flow control loop using electrical current

### Disinfection Module:

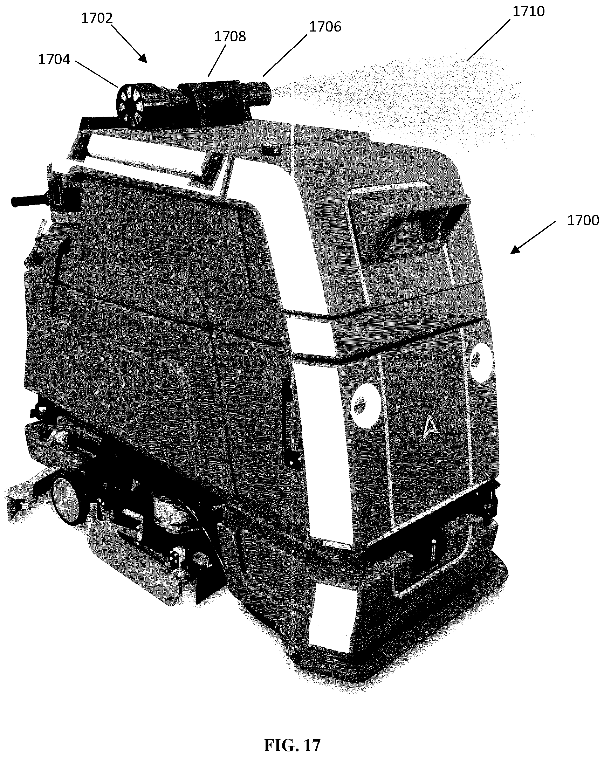

In a further embodiment, semi-autonomous cleaning device include a disinfection module. **FIG. 17** is a perspective view of a semi-autonomous cleaning device **1700** with a disinfection module **1702.** As seen in **FIG. 17****,** components of the disinfection module **1702** comprise of:
- High powered fan (DC voltage) **1704**
- Atomizer nozzle **1706**
- Electrostatic module cathode
- Electrostatic module **1708**

According to **FIG. 17**, the disinfection module consists of a spraying, misting and / or fogging system that will distribute a disinfectant solution **1710** onto touch areas such as handles, doors, handrails, touchscreens, tables, countertops, shelves, and other areas that need regular disinfecting. The disinfection module will mount to a semi-autonomous cleaning device and will be able to automatically navigate to any location of the facility and disinfect it as needed using the automation and infrastructure of our existing product.

The disinfection module **1702** will contain a solution tank, an atomizing system, a dispersion system, and an electrostatic system. The system will be mounted so the disinfectant solution **1710** can spread at an appropriate height and within a 1.5m distance from the cleaning device. By utilizing an electrostatic system the module we can maximize total coverage and disinfectant despite spray angle. Further info on the disinfection module can be found in the US provisional application No. 63/055,919, entitled "DISINFECTION MODULE FOR A SEMI-AUTONOMOUS CLEANING AND DISINFECTION DEVICE", filed on July 24, 2020, which is incorporated herein by reference in its entirety.

Implementations disclosed herein provide systems, methods and apparatus for generating or augmenting training data sets for machine learning training.

The functions described herein may be stored as one or more instructions on a processor-readable or computer-readable medium. The term "computer-readable medium" refers to any available medium that can be accessed by a computer or processor. By way of example, and not limitation, such a medium may comprise RAM, ROM, EEPROM, flash memory, CD-ROM or other optical disk storage, magnetic disk storage or other magnetic storage devices, or any other medium that can be used to store desired program code in the form of instructions or data structures and that can be accessed by a computer. It should be noted that a computer-readable medium may be tangible and non-transitory. As used herein, the term "code" may refer to software, instructions, code or data that is/are executable by a computing device or processor. A "module" can be considered as a processor executing computer-readable code.

A processor as described herein can be a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be a controller, or microcontroller, combinations of the same, or the like. A processor can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor may also include primarily analog components. For example, any of the signal processing algorithms described herein may be implemented in analog circuitry. In some embodiments, a processor can be a graphics processing unit (GPU). The parallel processing capabilities of GPUs can reduce the amount of time for training and using neural networks (and other machine learning models) compared to central processing units (CPUs). In some embodiments, a processor can be an ASIC including dedicated machine learning circuitry custombuild for one or both of model training and model inference.

The disclosed or illustrated tasks can be distributed across multiple processors or computing devices of a computer system, including computing devices that are geographically distributed.

The methods disclosed herein comprise one or more steps or actions for achieving the described method. The method steps and/or actions may be interchanged with one another without departing from the scope of the claims. In other words, unless a specific order of steps or actions is required for proper operation of the method that is being described, the order and/or use of specific steps and/or actions may be modified without departing from the scope of the claims.

As used herein, the term "plurality" denotes two or more. For example, a plurality of components indicates two or more components. The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

## Claims

1. A semi-autonomous cleaning apparatus (100) for cleaning floor surfaces, comprising:
a frame (102) supporting at least one storage volume;
a drive system (104) supported by the frame (102) and configured to move the frame along a floor surface;
a cleaning assembly (108) coupled to the frame (102) and configured to transfer debris from the floor surface to the at least one storage volume as the drive system (104) moves the cleaning assembly (108) along the floor surface;
a front or rear sensing module (114, 128) comprising a plurality of sensors configured for computing and guiding a path and direction of the cleaning apparatus (100);
a smart alert system further comprising a display screen (134) and an audio annunciator; and
an electronics system (106) supported by the frame and including at least a memory and a processor, the processor being configured to execute a set of instructions stored in the memory associated with the smart alert system to provide notification, and intent of operating modality of the apparatus and alert to danger signs-;
**characterized in that** the front and rear sensing module provide visibility of 270 degrees providing the cleaning apparatus full coverage of possible motions from the floor surface to the cleaning apparatus height; and
the display screen (134) and audio annunciators is configured to provide the intent of the operating modality of the cleaning apparatus (100) that mimics anthropomorphized interactions.

2. The apparatus (100) of Claim 1 wherein the plurality of sensors selected from list consisting of a front camera, rear camera, optical camera, thermal camera, 3D camera, structured light sensor, active stereo sensor and RGB camera.

3. The apparatus (100) of Claim 1 wherein the smart alert system includes at least one of light, sound, display screen, data notification, sound through a loudspeaker, sound through a microphone and data displayed through a touch display screen.

4. The apparatus (100) of Claim 1 wherein danger signs includes alerting mode of failure, requirement of user intervention, and object obstruction by cleaning assembly.

5. The apparatus (100) of Claim **1** wherein when the apparatus travels in a reverse direction, the apparatus initiates a beeping sound through the speaker.

6. The apparatus (100) of Claim 1 wherein blinking or illuminated lights indicate a direction of travel.

7. The apparatus (100) of Claim **1** wherein a colour-coded lights indicate a future path of travel.

8. The apparatus (100) of Claim 1 wherein the colour coding of lights indicate the modality of operation selected from a list consisting of mapping, cleaning, warning, emergency, and awaiting operator input.

9. The apparatus (100) of Claim 8 wherein the colour coding of lights is animated in intensity and in sequencing to indicate motions resembling hand gestures.

## Patentansprüche

1. Halbautonome Reinigungseinrichtung (100) zum Reinigen von Bodenflächen, umfassend:
ein Rahmen (102), der mindestens ein Aufbewahrungsvolumen trägt;
ein Antriebssystem (104), das von dem Rahmen (102) getragen wird und dazu konfiguriert ist, den Rahmen entlang einer Bodenfläche zu bewegen;
eine Reinigungsanordnung (108), die mit dem Rahmen (102) gekoppelt und dazu konfiguriert ist, Schmutz von der Bodenfläche zu dem mindestens einen Aufbewahrungsvolumen zu transferieren, wenn das Antriebssystem (104) die Reinigungsanordnung (108) entlang der Bodenfläche bewegt;
ein vorderseitiges oder rückseitiges Sensormodul (114, 128), umfassend eine Vielzahl von Sensoren, die zum Berechnen und Führen eines Weges und einer Richtung der Reinigungseinrichtung (100) konfiguriert sind;
ein intelligentes Warnsystem, ferner umfassend einen Anzeigebildschirm (134) und einen Audio-Melder; und
ein Elektroniksystem (106), das von dem Rahmen getragen wird und mindestens einen Speicher und einen Prozessor beinhaltet, wobei der Prozessor dazu konfiguriert ist, einen Satz von in dem Speicher gespeicherten Anweisungen, die dem intelligenten Warnsystem zugehörig sind, auszuführen, um eine Benachrichtigung und eine Absicht einer Betriebsmodalität der Einrichtung bereitzustellen und vor Gefahrenzeichen zu warnen;
**gekennzeichnet dadurch, dass** das vorderseitige und rückseitige Sensormodul eine Sicht von 270 Grad bereitstellt, die für die Reinigungseinrichtung eine vollständige Erfassung möglicher Bewegungen von der Bodenfläche bis zur Höhe der Reinigungseinrichtung bereitstellt; und
der Anzeigebildschirm (134) und die Audio-Melder dazu konfiguriert sind, die Absicht der Betriebsmodalität der Reinigungseinrichtung (100) bereitzustellen, die vermenschlichte Interaktionen nachahmt.

2. Einrichtung (100) nach Anspruch 1, wobei die Vielzahl von Sensoren ausgewählt ist aus einer Liste bestehend aus einer vorderseitigen Kamera, einer rückseitigen Kamera, einer optischen Kamera, einer Wärmekamera, einer 3D-Kamera, einem strukturierten Lichtsensor, einem aktiven Stereosensor und einer RGB-Kamera.

3. Einrichtung (100) nach Anspruch 1, wobei das intelligente Warnsystem mindestens eines von Licht, Ton, Anzeigebildschirm, Datenbenachrichtigung, Ton durch einen Lautsprecher, Ton durch ein Mikrofon und durch einen Touch-Anzeigebildschirm angezeigte Daten beinhaltet.

4. Einrichtung (100) nach Anspruch 1, wobei Gefahrenzeichen einen Warnmodus von Störung, Bedarf nach einem Benutzereingriff und Behinderung der Reinigungsanordnung durch einen Gegenstand beinhalten.

5. Einrichtung (100) nach Anspruch 1, wobei, wenn die Einrichtung in eine Rückwärtsrichtung fährt, die Einrichtung einen Piepton durch die Lautsprecher auslöst.

6. Einrichtung (100) nach Anspruch 1, wobei blinkende oder leuchtende Lichter eine Fahrrichtung angeben.

7. Einrichtung (100) nach Anspruch 1, wobei farbkodierte Lichter einen künftigen Fahrweg angeben.

8. Einrichtung (100) nach Anspruch 1, wobei die Farbkodierung von Lichtern die Modalität eines Betriebs angeben, die ausgewählt ist aus einer Liste bestehend aus Kartieren, Reinigen, Warnen, Notfall und Warten auf Bedienereingabe.

9. Einrichtung (100) nach Anspruch 8, wobei die Farbkodierung von Lichtern in Bezug auf Intensität und Reihenfolge animiert ist, um Bewegungen anzugeben, die Handgesten ähneln.

## Revendications

1. Appareil de nettoyage semi-autonome (100) pour le nettoyage de surfaces de sol, comprenant :
un châssis (102) supportant au moins un volume de stockage ;
un système d'entraînement (104) supporté par le châssis (102) et configuré pour déplacer le châssis le long d'une surface de sol ;
un ensemble de nettoyage (108) couplé au châssis (102) et configuré pour transférer les débris de la surface de sol vers l'au moins un volume de stockage à mesure que le système d'entraînement (104) déplace l'ensemble de nettoyage (108) le long de la surface de sol ;
un module de détection avant ou arrière (114, 128) comprenant une pluralité de capteurs configurés pour calculer et guider un trajet et une direction de l'appareil de nettoyage (100) ;
un système d'alerte intelligent comprenant en outre un écran d'affichage (134) et un annonceur audio ; et
un système d'électronique (106) supporté par le châssis et incluant au moins une mémoire et un processeur, le processeur étant configuré pour exécuter un ensemble d'instructions stockées dans la mémoire associée au système d'alerte intelligent pour fournir une notification, et une intention de modalité de fonctionnement de l'appareil et une alerte aux signes de danger ;
**caractérisé en ce que** le module de détection avant et arrière fournit une visibilité de 270 degrés, fournissant à l'appareil de nettoyage une couverture complète des mouvements possibles depuis la surface de sol jusqu'à la hauteur de l'appareil de nettoyage ; et
l'écran d'affichage (134) et les annonceurs audio sont configurés pour fournir l'intention de la modalité de fonctionnement de l'appareil de nettoyage (100) qui imite des interactions anthropomorphisées.

2. Appareil (100) selon la revendication 1, dans lequel la pluralité de capteurs est choisie parmi une liste constituée d'une caméra avant, d'une caméra arrière, d'une caméra optique, d'une caméra thermique, d'une caméra 3D, d'un capteur à lumière structurée, d'un capteur stéréo actif et d'une caméra RVB.

3. Appareil (100) selon la revendication 1, dans lequel le système d'alerte intelligent inclut au moins un parmi une lumière, un son, un écran d'affichage, une notification de données, un son via un haut-parleur, un son via un microphone et des données affichées via un écran tactile.

4. Appareil (100) selon la revendication 1, dans lequel les signes de danger incluent le signalement d'un mode de défaillance, la nécessité d'une intervention de l'utilisateur et une obstruction d'objet par l'ensemble de nettoyage.

5. Appareil (100) selon la revendication 1, dans lequel, lorsque l'appareil se déplace dans le sens inverse, l'appareil émet un bip sonore via le haut-parleur.

6. Appareil (100) selon la revendication 1, dans lequel des voyants clignotants ou lumineux indiquent une direction de déplacement.

7. Appareil (100) selon la revendication 1, dans lequel des voyants à code couleur indiquent un futur trajet de déplacement.

8. Appareil (100) selon la revendication 1, dans lequel le codage couleur des voyants indique la modalité de fonctionnement sélectionnée parmi une liste constituée de cartographie, nettoyage, avertissement, urgence et attente d'entrée de l'opérateur.

9. Appareil (100) selon la revendication 8, dans lequel le codage couleur des voyants est animé en intensité et en séquençage pour indiquer des mouvements ressemblant à des gestes de la main.
